# EUROPEAN PATENT APPLICATION

(11) **EP 4 537 714 A1**
(43) Date of publication of application: **16.04.2025**
(21) Application number: 23203167.4
(22) Date of filing: 12.10.2023
(51) Int. Cl.: A47J 27/14, A47J 36/32, A47J 44/00

(54) **A MODULAR FOOD PREPARATION SYSTEM**

(71) Applicant: Shaik, Rajeev, 9000 Gent (BE)
(72) Inventor: Shaik, Rajeev, 9000 Gent (BE)

(57) **Abstract**

The system comprises one or more food preparation modules (1) which include one or more containers (20). The containers include at least a top lid (21) enabling to receive food materials. The modules (1) are furthermore configured so that food materials can be transferred from a first module to a second module placed underneath the first module in a stack of modules. This may be done by aligning containers of the modules to each other and to aligned transfer openings (30,31) in the modules. Preparation of food materials can take place through a movement of the containers inside a module (1) or by food processing tools integrated in the containers (20). The system may be expanded by modules configured for dedicated tasks, such as cooking modules (4) and a water supply module (2). The system also offers an option for the user to perform part of the food preparation and cooking process manually.

## Description

### Technical Field

The technical field of the present invention is the field of automated cooking systems, wherein at least part of the process for preparing and cooking food is performed without the need for human intervention.

### Background Art

The field of automated cooking systems is a broad and rapidly evolving field. These systems typically use a combination of sensors, actuators, and software to control the cooking process. Presently available automated cooking systems can be divided into two main categories : countertop automated cooking systems and full-size automated cooking systems. The countertop systems are compact and intended mainly for use in a household kitchen, whereas the full-size systems are adapted for food preparation on a larger scale, such as in restaurants.

The full-size systems are usually technically complex and bulky and not easily applicable on a smaller scale. Countertop systems are often expensive apparatuses designed according to a predefined configuration, while upgrading or expanding the capabilities of the system is not possible. In addition, existing countertop systems are not adapted for use outside a kitchen environment, for example in an outdoor setting, nor are these systems applicable on a larger scale. Existing systems are designed to prepare a meal from start to finish, and cannot therefore be used in circumstances wherein the user wishes to combine manual cooking with automated parts of the food preparation or cooking process. Further drawbacks of existing automated cooking systems are related to sustainability and environment-friendly practices. Maintenance and cleaning of the system is often difficult and time consuming, while food waste production is high. Also, most systems include many different parts which are not interchangeable nor adaptable to different food handling preparation methods.

### Summary of Invention

The present invention relates to a modular automatic or semi-automatic cooking system that can be used to prepare and cook a variety of food preparations and meals. The system is modular in the sense that the system comprises a plurality of modules that can be combined according to the user's preference. A single module or a set of modules can also be used in combination with traditional cooking utensils and methods, thereby enabling the user to prepare food with a high degree of flexibility. Also, the user can purchase one or more modules and then gradually upgrade the system.

The system of the invention is applicable as a countertop system, but can also be adapted to a larger scale, so that it acquires the capability of currently known full-size systems, whilst maintaining the advantages in terms of modularity and upgradability.

With the modular design, the system also provides an option for cooking food manually by the user if desired. Further, the user can configure the modules in such a way that the user can use part of the system and combine it with traditional cooking utensils. Also, a number of configurations of the system modules can be used in outdoor settings.

The system comprises one or more food preparation modules which each include one or more containers. The containers comprise a top lid enabling to receive food materials in the container. The modules are furthermore configured so that food materials can be transferred from a first module to a second module placed underneath the first module in a stack of modules. Containers may include a top lid and a bottom lid so that transfer of food materials can take place by opening the bottom lid when the container is aligned to another container in a subsequent module of a stack of modules. Containers may also have a single lid wherein the container is rotatable about a transverse axis passing through the container (preferably through the centre thereof) so that food materials loaded into a container when the container is in a first position, can be discharged from the container when the container has been rotated 180°. Containers may be rotatable about said transverse axis regardless of whether they include one lid or two lids on opposite sides. Containers can be displaceable to different locations inside a module. Alternatively, containers can be stationary at a given location within the module, 'stationary' meaning that the container is not able to be displaced away from said given location. Such stationary containers are however preferably able to rotate about a transverse axis whilst remaining at the given location. According to embodiments, containers may also be rotatable about their own central axis extending between the top and bottom of the container. Preparation of food materials can take place through movements of the containers and/or by food processing tools integrated in the containers.

The food preparation modules include a housing for supporting one or more containers within the module, wherein the containers may either be stationary or displaceable relative to the housing. The housings of stacked modules preferably have the same shape and footprint so that the housings are easily stackable to form a vertical stack of food preparation modules. The housing may be provided with a sidewall and a top and bottom closure provided with transfer openings for receiving food materials from a module higher up in a stack and for discharging food materials to a module lower in the stack.

Alternatively, the housing may be configured to laterally contain an open support structure for supporting one or more containers so that a container of a first module is capable of transferring food materials directly to a container of a second module placed directly underneath the first module. For example, the housing could be a ring-shaped holder configured to carry said open support structure.

Such a support structure is preferably also mounted in a housing provided with a top and bottom closure and transfer openings. Regardless of the type of housing used, the support structure for the containers preferably enables a displacement and/or a rotation of one or more containers relative to the housing.

The system may be expanded by other module types, including for example a water supply module, a cooking module, a cooking residue or food receiving module. A cooking module may include a cooking vessel such as a cooking pot or a frying pan, and heating means to heat the vessel. Alternatively, it may include only a receptacle for receiving ingredients which need to be mixed or otherwise manipulated inside the receptacle but without heating the ingredients, for example for the preparation of a dough or batter. Such manipulations can of course also be done in a cooking module having heating means, by temporarily deactivating the heating means.

According to embodiments, a special food preparation module is placed directly above a cooking module, the special module being provided with one or more tools for interacting with food materials located in the cooking module, such as a stirring tool. Such a special food preparation module can also be placed directly above a traditional cooking vessel when the system is used in semi-automatic mode.

Module configurations of the system can be configured to autonomously clean containers and cooking vessels of the system, by a cleaning routine performed by the modules.

The system comprises a user interface and a main control unit for autonomously controlling a number of food preparation and/or processing steps in multiple module configurations according to instructions received through the user interface. A software application governs the programming of the main control unit and possibly local control units included in the modules, for executing a specific food preparation or cooking task.

The invention is in particular related to a modular automatic or semi-automatic cooking system comprising a plurality of food preparation modules, a user interface and a main control unit for autonomously controlling a number of food preparation and/or processing steps performed in a configuration comprising one or more food preparation modules, according to instructions received through the user interface, characterized in that :
- the food preparation modules are stackable one on top of the other according to a plurality of configurations in terms of the number of modules and the order of the modules in a stack, including a configuration wherein only a single module is used,
- each food preparation module comprises a housing configured to support one or more containers having a top and a bottom and comprising a top lid at said top of the containers, and configured to receive food materials at the top when the top lid is open, wherein the containers are configured to perform one or more of the following functions:
   o store the received food materials in the container,
   ∘ prepare the received food materials through one or more movements of the container,
   ∘ process the received food materials by a processing tool included in the container,
- the food preparation modules are configured so that food materials stored, prepared or processed in one or more containers of a first module can be transferred to one or more containers of a second module located under the first module in a stack of modules, or to a cooking vessel if the first module is at the bottom of the stack and the stack is placed on said cooking vessel, or if a configuration is used wherein only the first module is placed on a cooking vessel.

According to an embodiment, one or more containers of at least one food preparation module are displaceable to different locations inside the module, i.e. relative to the housing.

According to an embodiment, one or more containers of at least one food preparation module are configured to be located at a fixed location of the module, i.e. at a fixed location relative to the housing.

According to an embodiment, one or more containers of at least one food preparation module are rotatable about a transverse axis passing through the container, enabling the container to be reversed so that the top lid faces downward and the bottom of the container faces upward.

According to an embodiment, one or more containers of at least one module comprise a bottom lid at the bottom of the container, so that food materials can be transferred to a container positioned below said container without reversing the container.

According to an embodiment, one or more containers of at least one module are rotatable about their own central axis extending between the bottom and the top of the containers.

According to an embodiment, the housing comprises a sidewall and an upper and lower closure, said upper and lower closure being provided with one or more transfer openings, wherein the upper closure comprises at least one first transfer opening for supplying food materials to the module, and the lower closure comprises at least one second transfer opening for discharging food materials from the module.

According to an embodiment, one or more containers of at least one food preparation module are displaceable in two dimensions inside the housing between the upper and lower closures of the housing, so that the one or more containers are movable to a position suitable for receiving food materials through a first transfer opening and the top lid, and to a position suitable for discharging food materials through a second transfer opening.

According to an embodiment, a pair of transfer openings, respectively for receiving and discharging food materials into and from said one or more modules, are mutually aligned and located at said central location of the housing.

According to an embodiment, the housing of one or more food preparation modules comprises a support structure configured to support one or more containers.

According to an embodiment, the housing of the food preparation modules is configured to laterally contain an open support structure configured to support one or more containers, so that food materials can be transferred directly from a container of a first module to a container of a second module placed directly under the first module in a stack of modules.

According to an embodiment, said support structure is rotatable relative to the housing, about a central axis oriented perpendicularly to the stacking direction of the food preparation modules.

According to an embodiment, the support structure is configured to guide a translational displacement of one or more containers relative to the support structure itself.

According to an embodiment, the support structure comprises rails arranged crosswise and intersecting each other in a central location of the housing.

According to an embodiment, at least one of the food preparation modules is configured to be placed directly on top of a cooking vessel, said module comprising one or more tools for interacting with food materials located in said vessel, such as a stirring tool, and/or one or more tools for cleaning said vessel, and comprising one or more actuators for driving said tools.

According to an embodiment, the system further comprises one or more cooking modules specifically adapted to the food preparation modules, so that one or a stack of food preparation modules can be removably fixed to each one of said one or more cooking modules.

According to an embodiment, one or more of the cooking modules are provided with a discharge opening at the bottom, and further with a movable lid for opening and closing the discharge opening and with an actuator for driving said opening and closing.

According to an embodiment, the system may further comprise a residue collecting module configured to be placed at the bottom of a stack, directly underneath a cooking module, for receiving cooking residues from the cooking module discharged through the discharge opening.

According to an embodiment, the food preparation modules comprise actuators for opening and closing the top and (if present) bottom lids of the containers and for driving a movement of the containers, and wherein the containers equipped with one or more processing tools comprise one or more actuators for driving said processing tools.

According to an embodiment, the system further comprises a water supply module configured to be connected to an external water supply and configured to supply water to one or more containers of a food preparation module placed below the water supply module in a stack of modules, wherein the water supply module comprises an actuator for opening or closing the water supply.

According to an embodiment, the user interface is integrated in a wireless control device and wherein the main control unit is integrated in one of the modules.

According to an embodiment, the user interface and the main control unit are integrated in a wireless control device.

According to an embodiment, the wireless control device is a handheld phone or tablet computer.

According to an embodiment, the user interface and the main control unit are integrated in one of the modules.

According to an embodiment, the modules comprise local control units configured to receive command signals from the main control unit.

According to an embodiment, wherein the containers are cylinder-shaped.

According to an embodiment, the top lid and, if present, the bottom lid of the containers are movable in a horizontal plane when the food preparation modules are placed horizontally.

According to an embodiment, the processing tools include one or more of the following:
- a cutting and/or slicing tool,
- a mixing tool,
- a blending tool,
- an extrusion tool, including a piston and one or more nozzles, for pushing out a dough-type food material through the one or more nozzles to thereby shape the material.

According to an embodiment, the food preparation modules are configured so that the containers in each of said modules can be removed from the module and replaced in the module.

According to an embodiment, the system further comprises a holding structure for holding an array of containers filled with different ingredients, a first robotic transporter for positioning a food preparation module at a predefined position relative to the holding structure and a second robotic transporter for taking a container from the holding structure and inserting it into the thus positioned food preparation module, wherein the first transporter is equally configured to place the food preparation module onto another module according to a given configuration of the system, after receiving a predefined number of containers from the holding structure.

According to an embodiment, one or more of the food preparation modules comprises a ventilation unit.

The invention is equally related to a food preparation module suitable for use in a modular cooking system according to the invention.

The invention is also related to a method for preparing food by a user using a system according to the invention, the method comprising the following steps :
- via the user interface, the user identifies a required food preparation or meal as well as a first set of food preparation steps for the production of said preparation or meal which the user intends to perform manually, and a second set of food preparation steps which the user requires to be performed automatically by a configuration of modules of the system,
- the user assembles said configuration of modules for performing the second set of preparation steps,
- the user manually performs the first set of preparation steps,
- the configuration of modules autonomously performs the second set of preparation steps.

### Brief Description of Drawings

Figure 1 illustrates a stack of modules of a system according to an embodiment of the invention.
Figure 2 shows the stack of Figure 1, arranged on a traditional cooking vessel.
Figure 3 shows the stack of Figure 1, arranged on a cooking module according to an embodiment of the invention.
Figure 4 illustrates a countertop configuration comprising the stack of Figure 1, controlled by a user through a handheld device.
Figure 5 illustrates an embodiment of a food preparation module applicable in a modular system according to the invention.
Figure 6 illustrates a rail structure applicable in the housing of the module shown in Figure 5.
Figure 7 illustrates an embodiment of a container applicable in the food preparation module shown in Figure 5.
Figure 8 illustrates a food preparation module with increased height, enabling a rotation of the containers about a transverse axis.
Figures 9 and 10 illustrate containers applicable in the food preparation module of Figure 5, and provided with various examples of food processing tools.
Figures 11a and 11b illustrate a container suitable for receiving a dough-type food material and producing therefrom an extruded food preparation.
Figure 12 illustrates an embodiment of a water supply module applicable in a system of the invention.
Figure 13 illustrates an embodiment of a cooking module applicable in a system of the invention.
Figure 14 illustrates a food preparation module configured to be placed directly above a cooking module and provided with stirring tools and a cleaning tool.
Figure 15 illustrates a food preparation module with a housing in the form of a ring-shaped holder for containing an open support structure.
Figures 16 and 17 illustrate configurations of modules comprising food preparation modules in accordance with the embodiment of Figure 15
Figure 18 illustrates a setup suitable for enabling a user to use the system in automatic mode or in semi-automatic mode.
Figure 19 illustrates a full-size configuration of a system according to the invention, including a holding structure for holding a variety of containers.

### Detailed description of embodiments of the invention

The following detailed description and the accompanying drawings, while crucial for clarity and understanding, do not limit the scope of the invention solely to the embodiments explicitly depicted therein. The invention may be realized through numerous alternative implementations, encompassing a wide spectrum of technologies, platforms, and configurations.

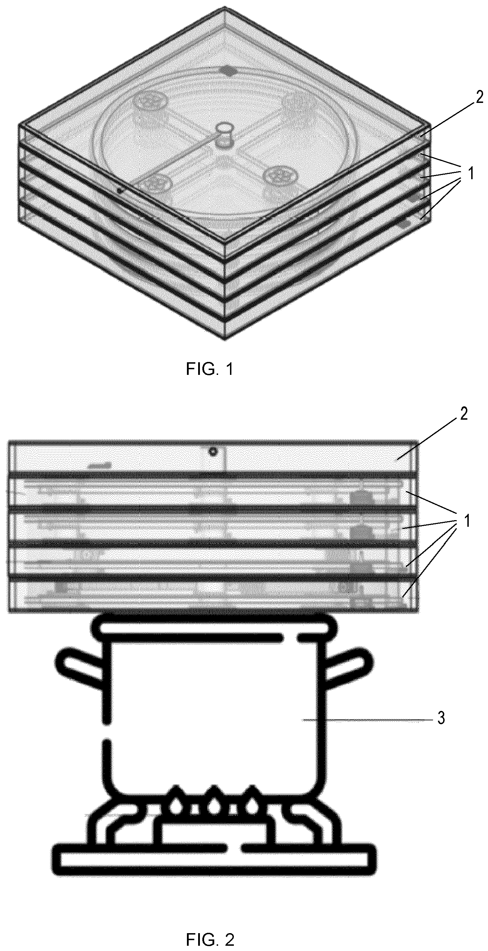

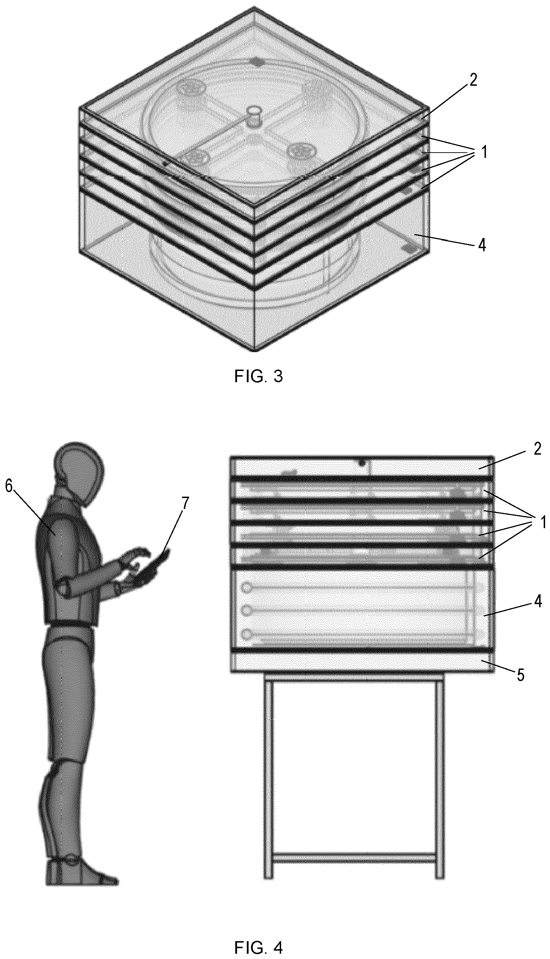

Figure 1 illustrates one configuration of a modular cooking system according to an embodiment of the invention. This configuration comprises a stack of four food preparation modules 1 and a water supply module 2 at the top. In Figure 2 it is shown that the 5-module stack is placed on a traditional cooking vessel 3, whereas Figure 3 shows a configuration wherein the stack is placed on a dedicated cooking module 4. The latter configuration, with the addition of a cooking residue collecting module 5 at the bottom of the stack is again shown in Figure 4 as a countertop application, configured to be operated by a user 6 through a user interface generated by a handheld wireless device 7.

As stated in the above summary, it is a characteristic of the invention that the system comprises stackable modules 1 comprising containers configured to receive food materials through a top lid and discharge food materials at the bottom of the module so that consecutive food preparation steps can be performed by the consecutively stacked modules from the top to the bottom of the stack.

An important advantage of a cooking system according to the invention is its flexibility and adaptability to changing circumstances. The system can be used in a large number of different configurations depending on the number of applied modules, the types of modules applied in the stack and the degree of automation required by the user. As illustrated in Figure 2, a stack of food preparation modules can be used in combination with a traditional cooking vessel. In this way, the user can automate the cooking process partially, and still continue to perform other parts manually using traditional tools, thereby operating the system in a semi-automatic mode. In contrast, the configurations illustrated in Figures 3 and 4 enable a fully automated cooking process, including food preparation steps such as washing, mixing, slicing, etc, and the actual cooking or frying of the thus prepared ingredients. This approach also enables upgradability of the system, allowing a user to purchase first one or more basic modules, and upgrading the system step by step in order to enhance its capabilities.

Embodiments of the various types of modules will hereafter be described in some detail. It is to be noted however that the invention is not limited to these specific realizations.

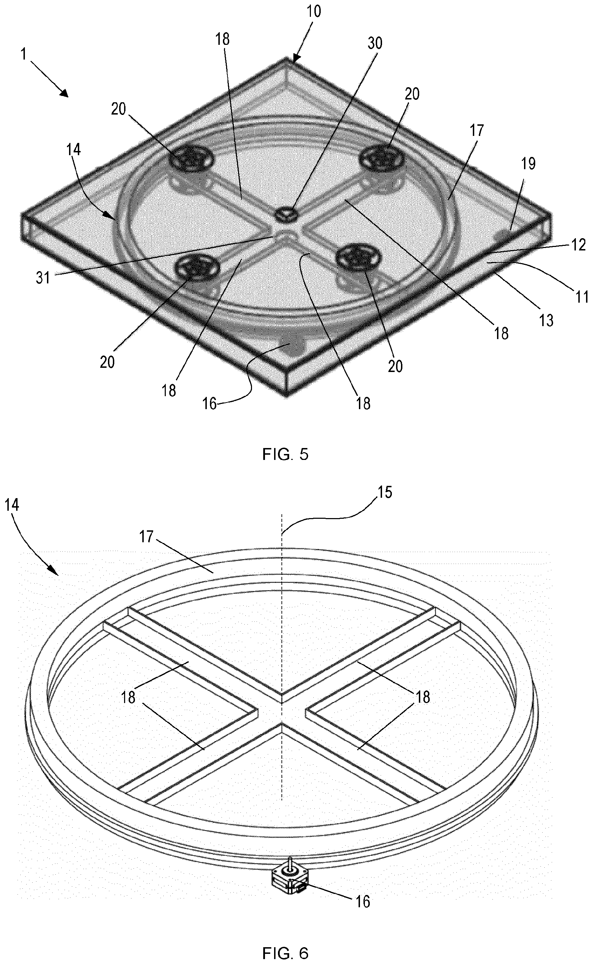

Figure 5 illustrates one food preparation module 1 of the configurations shown in Figures 1 to 4 in a 3D view. A food preparation module is defined within the present context as a module configured to prepare food materials for a cooking process but not for performing the actual cooking as such. Preparation may include storing, washing or mixing food materials as well as processing food materials, for example cutting, slicing, blending and the like.

In the embodiment shown, the food preparation module 1 comprises a housing 10 shown in transparent mode in order to visualize the other components contained within the housing. The housing is preferably formed of a strong but lightweight material such as aluminium or a suitable plastic. The housing 10 is flat and box-shaped, having an upstanding sidewall 11 and an upper and lower square plate 12, 13 at the top and bottom of the housing. Inside the housing, a rail structure 14 is rotatably mounted. The rail structure 14 is shown separately in Figure 6. This structure is rotatable about its own central axis 15, arranged so as to coincide with the central axis of the housing 10. An actuator 16 is provided for driving the rotation of the rail structure 14. The rail structure 14 comprises a ring 17 configured to interact with the actuator 16. The ring 17 may for example be provided with external teeth configured to engage with a pinion wheel driven by the actuator 16. The ring 17 could be guided on a circular track provided on the top and bottom plates 12, 13 of the housing 10. Such details are not shown in the drawings, but they are well within the general technical knowledge and various alternative ways of driving the rotation of the ring 17 may be devised within the scope of the present invention.

The rail structure 14 further comprises a set of rails 18 which intersect in a central area of the rail structure 14 and of the housing 10. These rails are configured to guide radial displacements (relative to the ring 17) of four food preparation containers 20. The number of containers 20 may be different, ranging from one up to four in this particular embodiment, but possibly higher in other embodiments of the invention.

According to preferred embodiments, the containers 20 are removable from the housing 10, which can be realised in a number of different ways, for example by arranging the upper plate 12 of the housing 10 to be pivotably attached to one straight upper edge of the sidewall 11, so that the plate 12 hinges about said edge. The housing 10 can then be opened at the top, allowing the containers 20 and possibly also the rail structure 14 to be placed or removed. Another solution could be to provide an opening in the sidewall 11 through which containers 20 can be inserted or removed, provided that the rails 18 of the rail structure 14 are properly aligned to the opening.

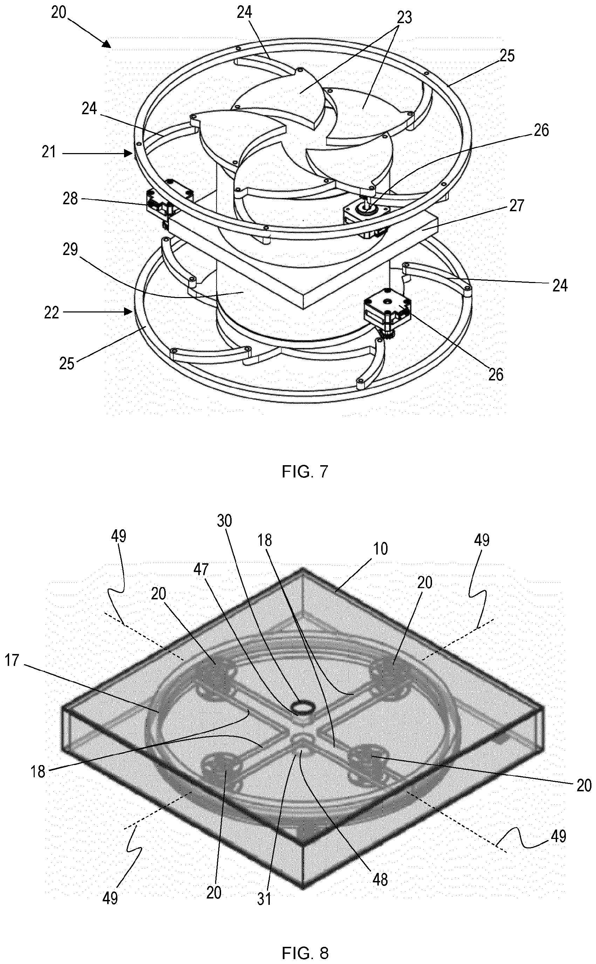

A view of one embodiment of a food preparation container 20 is illustrated in Figure 7. The container includes a cylindrical receptacle 29 provided with a top lid 21 and a bottom lid 22. In the embodiment shown, the lids comprise rotatable lid portions 23 pivotably attached to pivot arms 24 which are in their turn pivotable relative to an outer ring 25, enabling the lid portions 23 to open and close in the way of an iris. Such an iris-lid is known as such and it is just one way of implementing the upper and lower lid 21/22 of a container 20 applicable in a system according to the invention. Alternatively, the lids could be realized as slidable plate elements configured to slide between positions which either close off or open the receptacle 29. Actuators 26 for driving the movements of the lid portions 23 are provided. The actuators 26 shown in the drawings are not intended to represent actual technically operative actuators for the illustrated iris-type lids 21/22 but they are merely indicating the generic presence of suitable actuators adapted to the working principle of the lids.

The container 20 further comprises a support plate 27 mounted around the circumference of the container 20 at about half of the height thereof, the support plate 27 having a square outer shape. This outer shape is configured to be supported by the rails 18 so as to enable a linear movement of the container 20 relative to the ring 17 of the rail structure 14. An actuator 28 is provided for driving this linear movement. The actuator 28 as represented in Figure 7 is again merely a symbolic indication of the presence of a suitable implementation of a means for driving said linear movement. An actual realization could include a rotary actuator mounted on the container 20 and driving a pinion wheel interacting with a linear gear mounted on the rails 18.

As seen in Figure 5, the upper and lower plates 12 and 13 of the housing 10 each comprise a central transfer opening 30 and 31 respectively. The transfer openings 30/31 are aligned to each other in this embodiment, but this is not a limitation of the invention. The diameter of the openings 30/31 is preferably such that the surface area of the openings is equal to or somewhat larger than the surface area of the inlet and outlet openings of the containers 20 when the respective top and bottom lids 21 and 22 are in the open condition. The transfer of food materials from a first module 1 to a second module 1 placed directly under the first module in a stack, takes place by displacing a container 20 of the first module to a central position where the container 20 is aligned to the opening 31 in the lower plate 13. In the underlying second module, another container 20 is displaced to the corresponding central position, aligned to the opening 30 in the upper plate of the second module. The transfer thus takes place by opening the top lid 21 of the container 20 in the second module, opening the bottom lid 22 of the container 20 in the first module so that the food materials move by gravity from the top container to the bottom container and thus from the first module to the second module, through the mutually aligned transfer openings 31 and 30 of the first and second modules. In this way, food materials can be transferred stepwise from the top of the stack to the bottom of the stack.

According to embodiments of the invention, one or more containers 20 of a food preparation module 1 are rotatable about a transverse axis going through the container, preferably a horizontal axis going through the centre of the container when the container is placed horizontally. This rotation thereby enables tilting the container so that the top lid 21 and the bottom lid 22 exchange places without the container moving laterally within the module. Such a rotation, when executed continuously at increased speed is also useful for washing food materials, or for cleaning the container after a food preparation process. This rotation furthermore enables applying containers which only have a top lid 21 and no bottom lid. The single lid serves as a lid for receiving food materials when the container is oriented with the lid 21 at the top, and for discharging food materials when the container has been rotated 180°.

In order to enable such a rotation about a transverse axis, the height of the module housing 10 needs to be increased compared to the embodiments shown so far. Figure 8 illustrates such a module with increased height of the housing 10. The rotation about a transverse axis of the containers 20 may be enabled for example by making the rails 18 rotatable about horizontal axes 49, relative to the ring 17 of the rail structure 14. In that case, the rails 18 need to be separate from each other in the central area of the housing 10. Also, the support plate 27 must be guided by the rails 18 at both the top and bottom surfaces of said support plate 27. This rotation can be driven by suitable actuators mounted on the outer circumference of the ring 17. Other ways of driving such a transverse rotation are possible. For example, if the lids 20/21 are realized in another way so that the lids do not extend away from the footprint of the receptacle of the container, the rotation could be realized relative to the rails 18, provided that the guidance of the containers 20 along the rails allows such rotation.

As seen in Figure 8, due to the increased height of the housing 10, the distance between the lids 21/22 and the transfer openings 30/31 has also increased. This requires the addition of tube elements 47 and 48 for conducting the food materials between the lids and the respective transfer openings.

According to some embodiments, one or more containers 20 may also be rotatable about their own central vertical axis. An additional actuator for driving this movement is then provided. This actuator is not illustrated in Figure 7. This capability could for example be realized by mounting the cylinder 20 so that it is rotatable relative to the support plate 27, providing a gear wheel around the container 20, and an actuator mounted on the support plate 27, said actuator driving the rotation of a pinion wheel interacting with the gear wheel.

The invention is not limited to embodiments of food preparation modules 1 wherein the transfer openings 30 and 31 of a module are mutually aligned and located at the centre of the module, nor to embodiments wherein only one transfer opening 30 is present for receiving food materials and only one transfer opening 31 for discharging food materials. Modules according to other embodiments could comprise one or more transfer openings for receiving food materials located at different locations than one or more transfer openings for discharging food materials.

In a stack of food preparation modules comprising a housing having a top and bottom closure 12 and 13, it is required that a transfer opening for discharging food materials from a first module is aligned to a transfer opening for receiving food materials in the module directly underneath the first module. However, there are many possibilities in terms of the number of transfer openings and their locations within the module.

The invention is also not limited to embodiments of food preparation modules wherein the containers are displaceable relative to the housing of the module so as to become aligned to a transfer opening (like the movement along the rails 18 in the illustrated embodiment). Containers could be configured to be mounted stationary relative to a pair of mutually aligned transfer openings, so that they always receive and discharge food materials through these same openings.

The above-described rotation of containers about a transverse axis (i.e. tilting to reverse the positions of the top and bottom of the container) is preferably also enabled when the containers are not displaceable within the housing, i.e. when the containers are configured to be at a stationary location relative to a pair of transfer openings of the module. In that case, a rail structure 14 is not required, and the containers can be rotatably mounted at the respective locations, for example mounted on a frame with an actuator attached thereto for driving the horizontal rotation of the container. Possibly, the rotation of containers about their own vertical axis may also be enabled when the containers are not displaceable within the housing of the module.

The container shown in Figure 7 is configured to perform either a function of storing food materials or of preparing food materials through the movement of the container within the module 10. For example, when vegetables and water are added to a container 20, a rotation of the container about a transverse axis, possibly combined with a rotation of the rail structure 14 can be applied for washing the vegetables. Typically, such basic containers are applied in the upper modules of a stack. Preparation of food materials in a food preparation module may also be done without movement of the containers. According to embodiments of the invention, one or more containers of a food preparation module are suitable for soaking, sprouting, fermenting or marinading food materials over a period of time. Such containers are for example useful for the preparation of prebiotics.

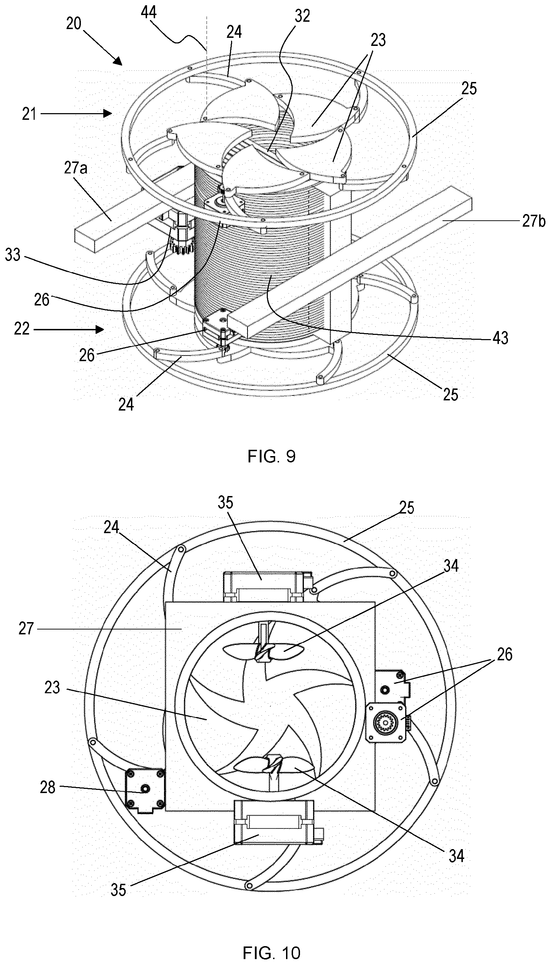

Food preparation modules 1 placed lower in the stack can be provided with food preparation containers equipped with processing tools for processing food materials. Examples of such containers are shown in Figures 9 to 11. Figure 9 illustrates a food preparation container 20 provided with a slicing tool. The tool includes a set of knives 32 and a set of ring-shaped counterknives 43 stacked vertically, so that the knives 32 can move in between the counterknives 43 when they are pivoted about a vertical axis 44. The ring-shaped counterknives 43 form a receptacle capable of holding non-fluid ingredients such as vegetables or the like, which can be sliced into fine slices by the pivoting knives 32. Iris-type top and bottom lids 21 and 22 are present as in the previous embodiment. An actuator 33 is provided for driving the movement of the slicing knives 32. The actuator is represented in a symbolic way and not in accordance with a realistic embodiment, which is however realisable according to various technical implementations within the scope of the invention. The container 20 is provided with side supports 27a and 27b which perform the same function as the support plate 27 in the previous embodiment, i.e. guiding the container on the rails 18. However, this type of container may also be placed at a stationary location within the housing, in which case the side supports are not required. However, the slicing tool scope is not limited to these specific realizations. There can be more variations possible. For example, a skilled person can imagine the food preparation container 20 can have a top lid but without bottom lid, radial knives attached to a motorized piston which moves along the container capable of slicing the vegetables which can be sliced into fine slices.

Figure 10 illustrates a top view of a food preparation container 20 provided with two blending tools comprising blending implements 34 which are rotatably arranged within the container 20, and actuatable by suitable actuators 35 mounted outside the container.

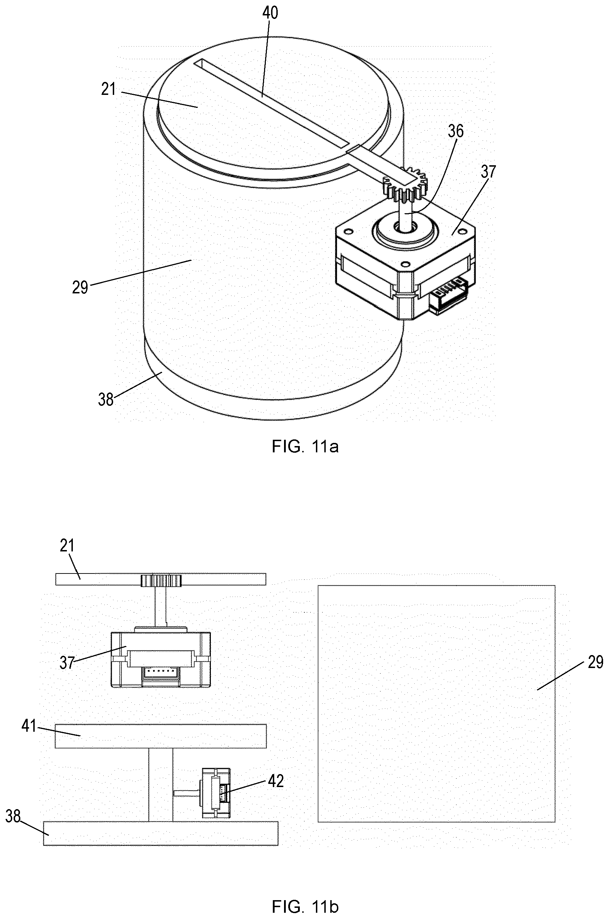

Figures 11a and 11b illustrate a food preparation container 20 configured to receive moulded food materials such as a dough and to produce specific shapes by pushing the material through a nozzle shape. The container comprises again a cylindrical receptacle 29 provided with a top lid 21 that is pivotable about a vertical axis 36 by a rotary actuator 37 mounted on the container, in order to close or open the lid 21. This is an example of a container comprising only a top lid 21 and no bottom lid. This means that the container must be configured to be rotatable about a transverse axis, so as to be able to reverse the container so that the top lid becomes a bottom lid, enabling to discharge the contents of the container to a transfer opening of the module and to a module lying underneath said module in the module stack.

The top lid 21 is provided with a nozzle in the form of an elongate slit 40. The container further comprises a movable piston 41 inside the container and corresponding to the container's cross section surface, and another actuator 42 mounted on a bottom plate 38 of the container and configured to drive a linear movement of the piston 41 inside the receptacle 29. Dough material is entered at the top when the lid 21 is open and when the container is in the upright position illustrated in the drawings. When the lid 21 is closed and the container is rotated about 180°, the dough material can be pushed through the slit 40, to thereby extrude a pancake shape from the compacted dough. The pancake shape can be transferred to an underlying module of the stack, for example a cooking module (described further in this text) or to a traditional cooking vessel or frying pan when the module is placed thereon. Any other nozzle shape can be integrated in the top lid, to thereby produce other extruded shapes, such as pasta shapes of various types. Another embodiment of a container for producing extruded food materials comprises only a top lid 21 that is not provided with any nozzle openings, and further comprises nozzle openings in the cylindrical receptacle 29 of the container. This enables the production of elongate spaghetti-type extrusions from a dough-type food material, said extrusions being pushed out through the openings in the receptacle 29. This container is then not able to transfer the extruded shapes to another container, but it is able to transfer them to a cooking vessel onto which a module comprising this container is placed.

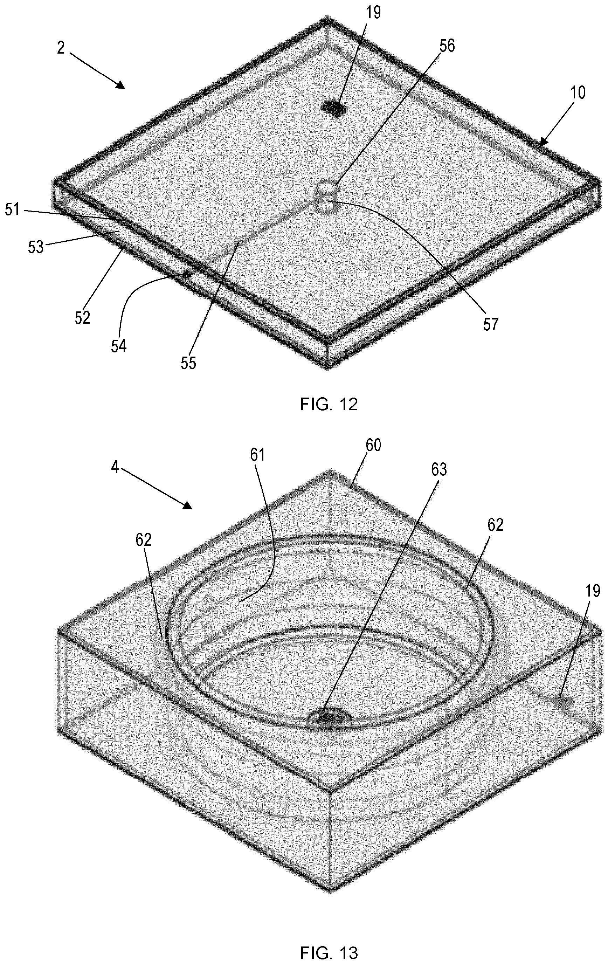

The top module 2 in the stack shown in Figures 1 to 4 is a water supply module for supplying water to containers of underlying modules of a stack and/or to cooking modules at the bottom of the stack. Water may be required for washing food materials, or as a cooking ingredient, or for cleaning containers or cooking vessels after a cooking process. The water supply module 2 is shown in more detail in Figure 12. It comprises a housing 50 having the same in-plane dimensions as the food preparation modules 1, and comprising, like the other modules, an upper plate 51 and a lower plate 52 connected by a sidewall 53. In said sidewall 53, a lateral supply port 54 is provided, configured to be coupled to an external water supply. The module 2 further comprises internal water conduits 55 and 56 coupled to said supply port 54 and configured to guide a flow of water to a central opening 57 in the lower plate 52 of the module housing 50. Through this central opening 57, water can be dispensed into a container of the module placed below the water supply module 2 in the stack, and possibly from there to further mutually aligned containers of subsequent modules of the stack, down to the cooking vessel at the bottom of the stack. The water supply module 2 is provided with an actuator which is not shown in the drawing. This actuator could be an electrically operated valve for turning the water supply towards the central opening 57 on or off. Water can thereby be dispensed into a container of a lower placed module in order to wash food materials, or in order to clean the containers of the modules. The water supply module may be provided with multiple openings 57, each coupled to a separate conduit 56 connected to the water supply port 54. This would be required for example if one or more of the food preparation modules is equipped with containers mounted at stationary locations relative to respective transfer openings in the modules.

In the configuration shown in Figures 3 and 4, the stack comprises a cooking module 4 placed directly under the stack comprising the food preparation modules 1 and the water supply module 2. The cooking module 4 is shown in more detail in Figure 13. It comprises a housing 60 having the same square footprint as the food preparation modules 1 and the water supply module 2, so that these other modules can be stacked on top of the cooking module 4. The cooking module further comprises a cooking vessel 61 and a heater 62 for heating the contents of the cooking vessel 61. The heater may include an electrically powered heating serpentine 62 around the circumference of the cooking vessel 61, as well as a heating element (not shown) underneath the vessel. In the embodiment shown, the cooking vessel 61 comprises a central opening 63 provided with a closable iris-type lid operable by an actuator (not shown). The cooking module 4 preferably also includes one or more sensors (not shown) such as temperature sensors configured to measure the temperature of the contents of the cooking vessel and/or the temperature of the heating elements or of the vessel itself. A cooking system according to the invention may include several different cooking modules, provided for example with cooking vessels of different dimensions, including a cooking vessel that may be shallow in the manner of a frying pan.

In the configuration shown in Figure 4, the stack further includes a residue collecting module 5 underneath the cooking module 4. This is basically a housing with a central opening in the top plate of the housing, configured so that the central opening is aligned with the opening 63 at the bottom of the cooking vessel 61 of the cooking module 4 when the cooking module 4 is stacked on top of the residue collecting module 5. The residue collecting module 5 is thereby configured to collect fluid cooking residues from the cooking vessel 61 when the opening 63 at the bottom thereof is opened. The residue collecting module 5 preferably comprises an evacuation port (not shown) for easy removal of the collected cooking residues.

The system could comprise several cooking modules adapted to be combined in the same cooking configuration. For example, a cooking module as shown in Figure 13 could be placed on top of another cooking module. Liquid or semi-liquid food materials could then be transferred through the discharge opening 63 to the underlying cooking module which can then perform another cooking step on the received food materials.

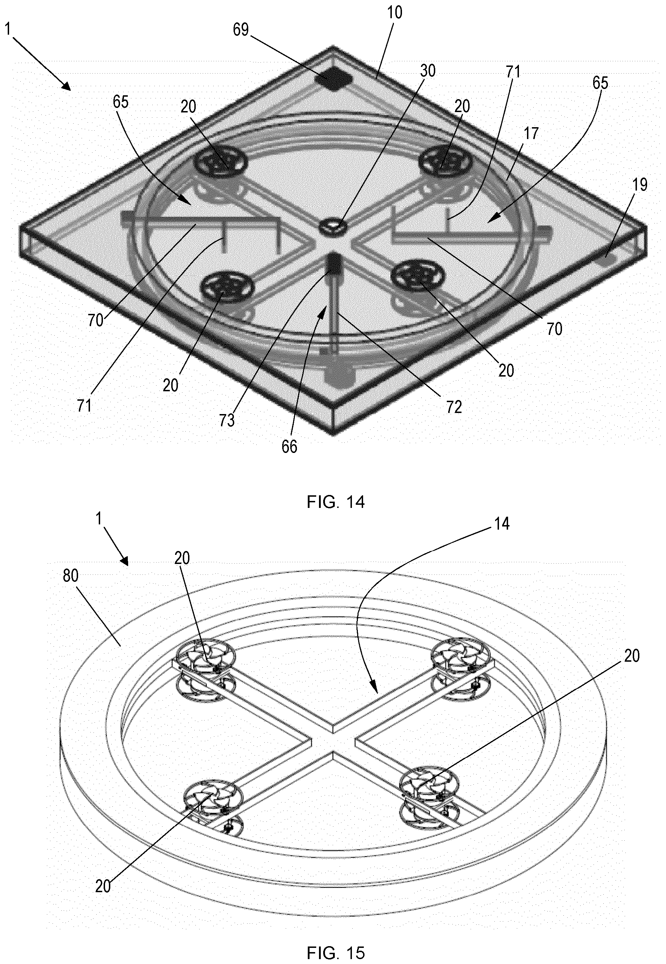

A food preparation module 1 specifically adapted to be placed directly above a traditional cooking vessel or a cooking module is illustrated in Figure 14. It comprises the housing 10 and the rail structure 14 and containers 20 as described above, but it is furthermore provided with stirring tools 65 and a cleaning tool 66. Each stirring tool 65 comprises an arm 70 and stirring fingers 71 extending sideways from the arm 70 and oriented horizontally in the image shown. The arm 70 is pivotably attached to the ring 17 of the rail structure 14. The arm 70 can be pivoted about its own longitudinal axis over 90° to bring the stirring fingers 71 into a vertical position, so as to be able to stir food materials in the cooking vessel. The stirring action is actuated by rotating the rail structure 14 about its central rotation axis 15. Actuators (not shown) are included for actuating the pivoting motion of the stirring tools 65. In the embodiment shown, the module further comprises a cleaning tool 66 that is equally pivotably attached to the ring 17 of the rail structure 14. The cleaning tool 66 comprises an arm 72 and a brush 73 at the end thereof. The arm 72 is pivotable about an axis oriented tangentially to the ring 17, to thereby bring the arm down into the cooking vessel. An actuator (not shown) is included for driving the pivoting motion of the cleaning tool 66. By rotating the ring 14, the brush 73 is able to clean the inner surface of the cooking vessel. The module mounted directly above the cooking vessel could be provided with other types of food manipulation tools instead of or in addition to the stirring tools 65. The module could be provided without the cleaning tool. Alternatively, no food manipulation tools could be provided in said module, if a particular cooking process does not require such tools.

The module shown in Figure 14 is further provided with a ventilation unit 69. This may be a unit comprising a fan and an electric motor for driving the fan, wherein said unit is fitted in an opening provided in the top plate of the module, preferably with a grid placed flush with the top plate. However other known embodiments of ventilation units can be applied in a system of the invention. The ventilation unit is configured to remove gaseous substances produced by a cooking process from the module stack. Although the preferred place of a ventilation unit is in the module placed directly on top of a cooking module 4, ventilation units could also be integrated in other modules of a system according to the invention.

According to a preferred cooking method using a configuration as shown in Figures 2, 3 or 4, all the ingredients required for cooking a meal are first prepared step by step by the modules higher up in the stack and assembled in a food preparation module like the one shown in Figure 14, i.e. a module comprising tools, like the stirring tools 65, capable of interacting with food materials in a cooking vessel directly underneath the module 1. The ingredients are then released into the cooking vessel for cooking the actual food. In other words, the top food preparation module of the stack does not directly drop the food into a cooking vessel. The latter approach is however not excluded, and it can be done by aligning containers in subsequent food preparation modules from the top of the stack to the bottom.

The cooking module 4 is not just limited to the cooking of food requiring heating of the food. For example in case of dough or batter preparation, the food materials can interact with utensils such as the stirring tools 65 in the module shown in Figure 14, when that module is placed directly above the cooking module. In this case, the heater 62 is turned off. This explains the diverse usage of the cooking module 4 and it's functioning is not limited to any scope. The food preparation module 1 directly above the cooking module 4 can be configured with tools like stirring or mixing or other tools as required.

The system can comprise also a cooking module that is not provided with heating means, but that comprises only a vessel suitable for the preparation of food materials without heat input, such as dough or batter.

So far various food preparation modules 1 have been described as comprising a box-shaped housing 10 having a sidewall 11 and a top and bottom closure, i.e. the top and bottom plates 12 and 13, and with containers 20 arranged between said top and bottom closure. The housing could have a different shape apart from the represented box shape, as long as the shape enables stacking the modules in a vertical stack and transferring food materials from a module higher in the stack to a module lower in the stack.

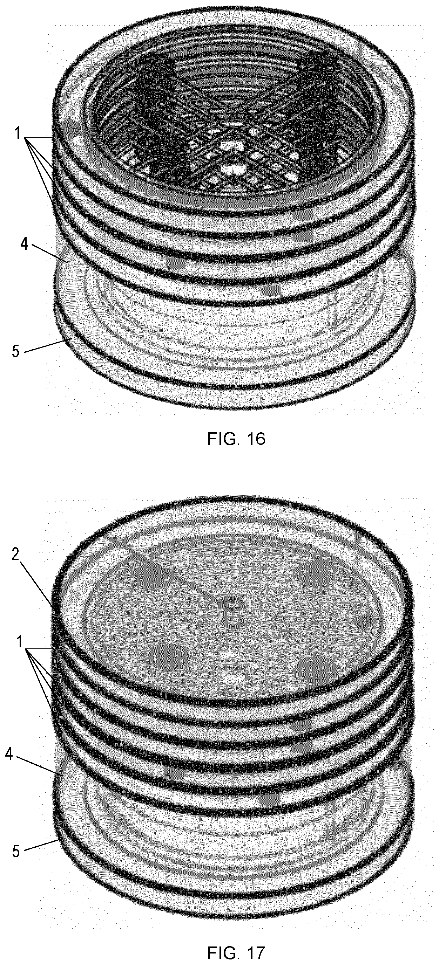

The invention is furthermore not limited to food preparation modules having a housing that is closed at the bottom and top and provided with transfer openings. Figure 15 shows an alternative design wherein the housing 80 is a ring-shaped holder configured to maintain the open rail structure 14 described above, but without a top and bottom plate. This means that no transfer openings are available and that the transfer of food materials to an underlying module takes place directly from an upper container to a lower container in the stack. Figure 16 illustrates a configuration including a stack of food preparation modules 1 according to this embodiment. It is seen that the cooking module 4 and the residue collecting module 5 now also have a round housing adapted to the outer shape of the food preparation modules 1. Figure 17 shows a configuration further comprising a water supply module 2, now also provided with a round housing adapted to the shape of the food preparation modules 1. The housings of the various modules of the system are preferably provided with interlocking means for maintaining the modules in a correct stacked position relative to each other. For example this could be magnets or other interlocking means. The interlocking means are preferably easily releasable manually but could also be more rigid interlocks releasable by special actuators.

Although some or all of the modules 1 to 5 could be battery-operated, preferably all the modules comprise an electrical connection port (not shown in the drawings) for connection to an external electrical power source, such as a power grid or generator. Preferably the majority of modules can be electrically connected to each other in a stack so that not more than one module requires direct connection to a grid or other power source. A combination of battery-operated modules can be used in a setting where no external power is available, such as in an outdoor setting. Electric power is required for driving the various actuators and the heaters of the cooking modules.

Besides electric power per se, any configuration of the system of the invention, whether it is working in a fully automatic or semi-automatic mode, requires a control of the automatic food preparation steps performed in the modules of the system. This control may entail one or more of the following actions : verifying the presence of food materials in the containers, washing, mixing or otherwise preparing food materials, processing food materials, for example slicing or blending, cooking one or more of said materials to arrive at a final dish or intermediate food preparation. Additional actions may include cleaning the containers of the system by introducing water and a cleaning agent in the containers at the top of the stack and executing a cleaning procedure from the top of a stack to the bottom, including the cleaning of the cooking vessel of a cooking module 4.

In a system according to the invention, these steps are consecutively performed in consecutive modules, from the top of the stack to the bottom of the stack. Coordination of the steps requires controlling treatment times, actuation of specific movements and treatments in a given order, possibly monitoring of temperatures or pressures measured by sensors included in the modules and initiating actions on the basis of such measurements. The control of these steps and actions by the modules of a system of the invention is controlled by a main control unit. The main control unit receives instructions regarding a required food preparation via a user interface. A software application governs the interaction between the interface and the main control unit, as well as the interaction between the main control unit and the modules of a particular configuration. Various ways of realizing a suitable interface, a main control unit and a software application are applicable in a system according to the invention. One exemplary realisation is first described on the basis of the configuration illustrated in Figure 3.

In this configuration, the user interface is generated on the screen of the handheld device 7. The main control unit may be physically located in the handheld device 7, or in one of the modules, for example in the water supply module 2 at the top of the stack.

The main control unit is an electronic unit including one or more programmable microchips, and configured to receive instructions from the user interface, for example a request to prepare a particular dish using a configuration as shown in Figure 3, i.e. a stack consisting of, from bottom to top : a residue collecting module 5, cooking module 4, four food preparation modules 1 and a water supply module 2. The main control unit may communicate to the user 6 (on the screen of the handheld device 7) all required ingredients in terms of the number or weight of the ingredients and the number of containers 20 into which the user is required to load these ingredients in one or more of the modules. The majority of ingredients will be required to be loaded into the upper food preparation module 1. The main control unit could also communicate suggestions to alter the particular configuration, for example to add or remove one or more modules, according to the most efficient cooking method. Once the required ingredients are loaded in the containers 20 and the configuration of modules is assembled, the main control unit needs to coordinate the consecutive preparation steps, including the transfer of food materials from one module to the next, or to the cooking vessel.

It is seen that all the modules represented in Figures 5 and 12-14 comprise a local control unit 19. This may equally be a programmable microchip configured to receive instructions from the main control unit for activating the actuators or heating elements of the module containing the local control unit 19. The local control unit may be configured also to send signals to the main control unit, for example regarding measurements obtained from sensors included in the module. The communication between the main control unit and the local control units takes place by wireless communication.

Other solutions may however be implemented in terms of controlling a given module configuration. The user interface may be integrated in one of the modules, for example the water supply module 2 which may then equally contain the main control unit, so that an external handheld device is not required. Instead of wireless communication between the main control unit and the local units, wired connections may be provided by including wiring and suitably placed contacts in the modules, so that wired signal transmission between the modules is enabled. When such wired communication between the main control unit and the modules is enabled, local control units may not be required and the main control unit may be configured to directly control the actuators or heaters of a given system configuration.

According to preferred embodiments, the control unit is capable of starting a cooking of food preparation process at a previously scheduled time, indicated by a user via the user interface. This may be for example a set of autonomously performed food preparation steps, performed by a given stack of food preparation modules, wherein the user has previously entered basic ingredients into the containers of the top module.

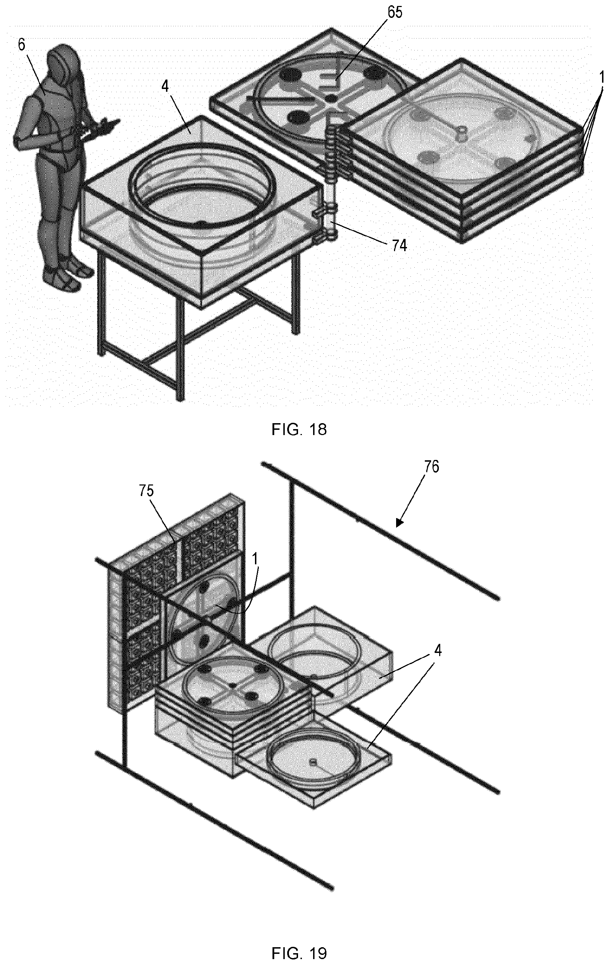

Figure 18 illustrates a use of a system according to the invention as a countertop system enabling a user to prepare a meal either in fully automatic mode, i.e. without manual intervention, or in semi-automatic mode, wherein the user is able to enjoy performing certain steps manually while the system performs the remaining steps autonomously. In the illustrated configuration, a number of modules are pivotably attached to a vertically arranged pillar 74, so that the modules can hinge about a vertical axis. This enables the user 6 to easily bring one or more modules into a required configuration or move them to a position away from said configuration. From the position wherein the user is standing, the user is able to oversee the automatically performed steps and to perform manually a number of further steps. For example, all food preparation steps could be performed automatically by a stack of food preparation modules 1, whereafter the thus prepared ingredients are deposited in a cooking module 4. The user can then elect to cook the ingredients manually in said cooking module, after pivoting the stack of food preparation modules away from the cooking module. Alternatively, the user could prepare the materials manually and load them into the module provided with stirring tools 65, thereafter align said module to the cooking module 4 and instruct the system to prepare a given meal autonomously.

This configuration brings clear advantages of the modular cooking system of the invention. For example in case of a breakdown of one or more modules of the system, the user can still perform the cooking with available working modules or with a cooking vessel with traditional heating.

According to embodiments of the invention, the control unit is configured so that when the system is used in semi-automatic mode, the control unit communicates to the user via the user interface when and/or how to perform certain steps manually, for example informing the user of the required cooking time of ingredients prepared autonomously by a stack of food preparation modules 1.

As stated above and as illustrated in Figures 3 and 15, the system of the invention can be applied as a countertop system. The system can also be used in a full-size setting without changes to the modules as such, but with the addition of means for automatically manipulating containers and modules according to a required configuration.

Figure 19 illustrates such a full-size configuration in a conceptual way, without including technical details. This configuration includes a holding structure 75 configured to hold a large number of containers 20, including containers which are pre-filled with particular ingredients, and empty containers with or without food processing tools integrated therein. The holding structure 75 can be a large vertical rack with encoded positions configured to be accessed by a robotic arm or other type of robotic transporter (not shown). Another robotic transporter 76 is configured to pick up a food preparation module 1 and position it at a predefined place relative to the holding structure 75. The first robotic transporter is then capable of taking out one or more containers 20 from the holding structure 75 and inserting them in the module 1. Containers 20 are extracted on the basis of instructions entered through the user interface and the first robotic transporter is controlled by the main control unit. After one or more modules have been provided with containers 20 in this way, a system configuration is put together by the second robotic transporter 76, possibly with the help of further manipulating arms or transporters adapted to putting together a stack of modules according to a desired configuration, derived form the user's instructions and controlled by the main control unit. When the configuration is established, an automatic cooking process can be initiated by the main control unit, according to a cooking sequence wherein modules are activated consecutively as described above.

As mentioned above, module configurations of a system according to the invention can be cleaned autonomously by the system. According to embodiments of the system, the main control unit is configured to be able to perform pre-defined cleaning routines, wherein containers of the consecutively stacked food preparation modules are cleaned by supplying water mixed with a cleaning agent to the containers and subjecting the containers to a cleaning movement. Preferably this includes a rotation of the containers about a transverse axis, as described above. Dirty water can be discharged down to the cooking module 4 and evacuated through the discharge opening 63. Fresh water and cleaning agent can then be supplied through mutually aligned containers, to clean the cooking module itself, possibly with the help of the cleaning tool 66 provided in the module 1 placed directly above the cooking module.

According to preferred embodiments, food preparation modules of the system can be configured in various ways, by adding or removing containers from the modules. The containers thereby represent interchangeable components of the system. Changing or adapting the capabilities of the system thereby does not require purchasing a more complete apparatus, but can be achieved by a limited number of interchangeable components. This results in a system that enables automated food preparation in a sustainable and environmentally friendly way.

## Claims

1. A modular automatic or semi-automatic cooking system comprising a plurality of food preparation modules (1), a user interface and a main control unit for autonomously controlling a number of food preparation and/or processing steps performed in a configuration comprising one or more food preparation modules (1), according to instructions received through the user interface, **characterized in that** :
- the food preparation modules (1) are stackable one on top of the other according to a plurality of configurations in terms of the number of modules and the order of the modules in a stack, including a configuration wherein only a single module is used,
- each food preparation module (1) comprises a housing (10,80) configured to support one or more containers (20) having a top and a bottom and comprising at least a top lid (21) at said top of the containers, and configured to receive food materials at the top when the top lid is open, wherein the containers are configured to perform one or more of the following functions:
∘ store the received food materials in the container,
∘ prepare the received food materials through one or more movements of the container,
∘ process the received food materials by a processing tool included in the container,
- the food preparation modules (1) are configured so that food materials stored, prepared or processed in one or more containers of a first module can be transferred to one or more containers of a second module located under the first module in a stack of modules, or to a cooking vessel (3,61) if the first module is at the bottom of the stack and the stack is placed on said cooking vessel, or if a configuration is used wherein only the first module is placed on a cooking vessel.

2. A system according to claim 1, wherein one or more containers (20) of at least one food preparation module (1) are displaceable to different locations inside the module.

3. A system according to claim 1, wherein one or more containers (20) of at least one food preparation module (1) are configured to be located at a fixed location of the module.

4. A system according to any one of the preceding claims, wherein one or more containers (20) of at least one food preparation module (1) are rotatable about a transverse axis passing through the container, enabling the container to be reversed so that the top lid faces downward and the bottom of the container faces upward.

5. A system according to any one of the preceding claims, wherein one or more containers (20) of at least one module (1) comprise a bottom lid (22) at the bottom of the container.

6. A system according to any one of the preceding claims, wherein the housing (10) comprises a sidewall (11) and an upper and lower closure (12,13), said upper and lower closure being provided with one or more transfer openings (30,31) wherein the upper closure (12) comprises at least one first transfer opening (30) for supplying food materials to the module, and the lower closure (13) comprises at least one second transfer opening (31) for discharging food materials from the module.

7. A system according to claim 6 wherein one or more containers (20) of at least one food preparation module (1) are displaceable in two dimensions inside the housing (10) between the upper and lower closures (12,13) of the housing, so that the one or more containers are movable to a position suitable for receiving food materials through a first transfer opening (30) and the top lid (21), and to a position suitable for discharging food materials through a second transfer opening (31).

8. A system according to any one of the preceding claims wherein the housing (10, 80) of one or more food preparation modules (1) comprises a support structure (14) configured to support one or more containers (20).

9. A system according to any one of claims 1 to 5, wherein the housing (80) of the food preparation modules is configured to laterally contain an open support structure (14) configured to support one or more containers (20), so that food materials can be transferred directly from a container of a first module to a container of a second module placed directly under the first module in a stack of modules.

10. A system according to claim 8 or 9, wherein said support structure is rotatable relative to the housing (10, 80), about a central axis (15) oriented perpendicularly to the stacking direction of the food preparation modules (1).

11. A system according to any one of the preceding claims, wherein at least one of the food preparation modules (1) is configured to be placed directly on top of a cooking vessel (61,3), said module comprising one or more tools for interacting with food materials located in said vessel, such as a stirring tool (65), and/or one or more tools (66) for cleaning said vessel, and comprising one or more actuators for driving said tools.

12. A system according to any one of the preceding claims, further comprising one or more cooking modules (4) specifically adapted to the food preparation modules (1), so that one or a stack of food preparation modules can be removably fixed to each one of said one or more cooking modules.

13. A system according to any one of the preceding claims, further comprising a water supply module (2) configured to be connected to an external water supply and configured to supply water to one or more containers (20) of a food preparation module (1) placed below the water supply module in a stack of modules, wherein the water supply module comprises an actuator for opening or closing the water supply.

14. A system according to any one of the preceding claims, wherein the processing tools include one or more of the following :
- a cutting and/or slicing tool,
- a mixing tool,
- a blending tool,
- an extrusion tool, including a piston (41) and one or more nozzles (40), for pushing out a dough-type food material through the one or more nozzles to thereby shape the material.

15. A system according to any one of the preceding claims, the system further comprising a holding structure (75) for holding an array of containers filled with different ingredients, a first robotic transporter for positioning a food preparation module (1) at a predefined position relative to the holding structure and a second robotic transporter for taking a container (20) from the holding structure and inserting it into the thus positioned food preparation module (1), wherein the first transporter is equally configured to place the food preparation module onto another module according to a given configuration of the system, after receiving a predefined number of containers from the holding structure.

16. A system according to any one of the preceding claims, wherein one or more of the food preparation modules (1) comprises a ventilation unit (69).

17. A food preparation module (1) suitable for use in a modular cooking system according to any one of the preceding claims.

18. A method for preparing food by a user (6) using a system according to any one of the preceding claims, the method comprising the following steps :
- via the user interface, the user identifies a required food preparation or meal as well as a first set of food preparation steps for the production of said preparation or meal which the user intends to perform manually, and a second set of food preparation steps which the user requires to be performed automatically by a configuration of modules of the system,
- the user assembles said configuration of modules for performing the second set of preparation steps,
- the user manually performs the first set of preparation steps,
- the configuration of modules autonomously performs the second set of preparation steps.
